# EUROPEAN PATENT SPECIFICATION

(11) **EP 1 248 710 B1**
(45) Date of publication and mention of the grant of the patent: **08.06.2005**
(21) Application number: 01901621.1
(22) Date of filing: 04.01.2001
(51) Int. Cl.: B60J 5/00, E05F 15/00, G01P 13/00

(54) **SAFETY SYSTEM**
SICHERHEITSSYSTEM
SYSTEME DE SECURITE

(30) Priority: 05.01.2000 SE 0000021
(43) Date of publication of application: 16.10.2002
(73) Proprietor: Lyshaug, Reidar, 946 91 Roknäs (SE)
(72) Inventor: Lyshaug, Reidar, 946 91 Roknäs (SE)
(74) Representative: Axelsson, Nils Ake
(86) International application number: PCT/SE2001/000009
(87) International publication number: WO 2001/049517

(56) References cited:
- CA-A1- 2 077 596
- US-A- 4 779 095
- US-A- 5 250 945
- DATABASE WPI Week 199531, Derwent Publications Ltd., London, GB; AN 1995-228126, XP002953017 & JP 7 137 537 A (YAZAKI CORP) 30 May 1995

## Description

### Technical field

The present invention relates to a safety system for motor-driven vehicles comprising at least one door.

### Background art

A serious problem encountered with public transport and other types of passenger vehicles is the occurrence of accidents during entering and alighting from the vehicle. In recent years, for instance, a number of bus accidents have occurred where the driver did not observe a passenger alighting from the bus and where the passenger became caught in the closed door. The vehicle may also reverse onto a passenger or other person.

Document AU-A-1,246,997 relates to a safety system for the doors of trains, buses and other vehicles. The system comprises sensors to detect the presence of a person or object against the closing edge of the door, and a programmable logic control unit or microprocessor which, upon receiving the signal from the sensor, feeds signals to an interface connected to the electrical system of the vehicle and to the pneumatic control of the opening and closing mechanism for the doors. The sensor comprises a deformable, resilient, protective strip along the closing edge of the door, and a pulsed, infrared, photo-electric emitter and receiver arranged so that deformation of the protective strip disconnects the infrared beam directed along the inside of the protective strip.

Document DE-A1-3150693 shows a safety system for a bus door, for instance. The safety system comprises a force measuring device and a position transducer for the door. The signals from the force measuring device and position transducer influence, via an amplifier, the electronics, and a solenoid valve, the pneumatic cylinder which in turn influences opening and closing of the door.

Document US-A-4,981,084 shows a safety system for bus doors, for instance. The system comprises position sensors that indicate whether the door panels are closed or not and report when the door panels are closed. The system also comprises movement sensors for the door panels, which sensors are coordinated with movement drive units in order to determine movement of the door panels and, through a programmable control unit, determine the direction of movement.

A safety system comprising the features of the preamble of claim 1 is also known from documents CA2077596 and US 5250945.

A big drawback with the safety systems described above is that they have not achieved the elimination of serious accidents. Another drawback with safety systems comprising various sensors in the protective strips on the doors is that the vehicle cannot be driven if the sensors erroneously indicate the existence of an object between the doors. This often results in the vehicle being out of service until the error has been remedied. Furthermore, the known safety systems, as described above, are often technically complicated, vulnerable and expensive.

### Brief described of the invention

The present invention aims to solve the problems mentioned above. This is achieved with a safety system for motor-driven vehicles comprising at least one door as described in claim 1. The safety system comprises a movement detector arranged at each door to detect movement within a predetermined area near said door and/or a movement detector at the rear of the vehicle to detect movement within a predetermined area behind the vehicle. Each movement detector is also connected to an indicator in conjunction with the rear-view mirror of the vehicle in order to attract the attention of the driver upon detection of movement within said area/areas to enable the driver alone to reach a decision. A simple, inexpensive and relatively reliable safety system is thus obtained.

A favourable variant is obtained in this connection is if said indicators are assembled in or in the proximity of the rear-view mirror of the vehicle, or at/inside other window-frame/front windscreen/window pane of the vehicle, or at the coach work of the vehicle in the proximity of the driver.

Another advantage in this connection is for each movement detector to consist of an IR movement detector.

A favourable variant obtained in this connection is for each movement detector to consist of a movement detector of laser type.

Another advantage in this connection is obtained if each movement detector consists of a camera of monitoring type.

Another advantage in this connection is obtained if each indicator consists of a lamp, each lamp emitting a different-coloured light.

A favourable variant obtained in this connection is that each indicator consists of monitor in combination with lamps indicating which camera is detecting movement.

In this connection it is also advantageous for the lamps to be fitted close to or in the rear-view mirror and for each lamp to light up when the relevant movement detector detects movement within said areas and to be extinguished with a predetermined time delay after the relevant movement detector no longer detects movement within said areas.

An advantageous variant is obtained in this connection if each indicator consists of a sound alarm, each sound alarm emitting an audible signal when the relevant movement detector detects movement within said areas, and ceasing to emit audible signals with a predetermined time delay after the relevant movement detector no longer detects movement within said areas.

An additional advantage in this connection is obtained if said time delay is approximately 0-10 seconds.

In this connection it is also advantageous for the movement detectors at the doors to be arranged above the doors and for said areas at ground level to comprise at least the width of the door and approximately 0-2 meter out from the vehicle.

Yet another advantage is obtained if the system is powered via the electrical system of the vehicle, and if the safety system is activated when the vehicle is started and the indicator(s) is/are activated for a predetermined period of time to check that the system is functioning.

In this connection it is also advantageous that the system also comprises a wireless headset with indicator lamps and sound emitting devices, each lamp emitting a different coloured light, wherein the headset can communicate with the movement detectors.

The invention will now be described in more detail in the form of embodiments, with reference to the accompanying drawings.

### Brief description of the drawings

- Figure 1: shows schematically a safety system for motor-driven vehicles in accordance with the present invention;
- Figure 2: shows a side view of part of the safety system in accordance with the present invention, shown in Figure 1;
- Figure 3: shows a view from the front of a part of the safety system in accordance with the present invention, shown in Figure 1;
- Figure 4: shows a view from above of the part of the safety system in accordance with the present invention shown in Figures 2 and 3; and
- Figure 5: shows schematically a rear-view mirror included in the safety system in accordance with the present invention, shown in Figure 1.

### Detailed description of embodiments of the present invention

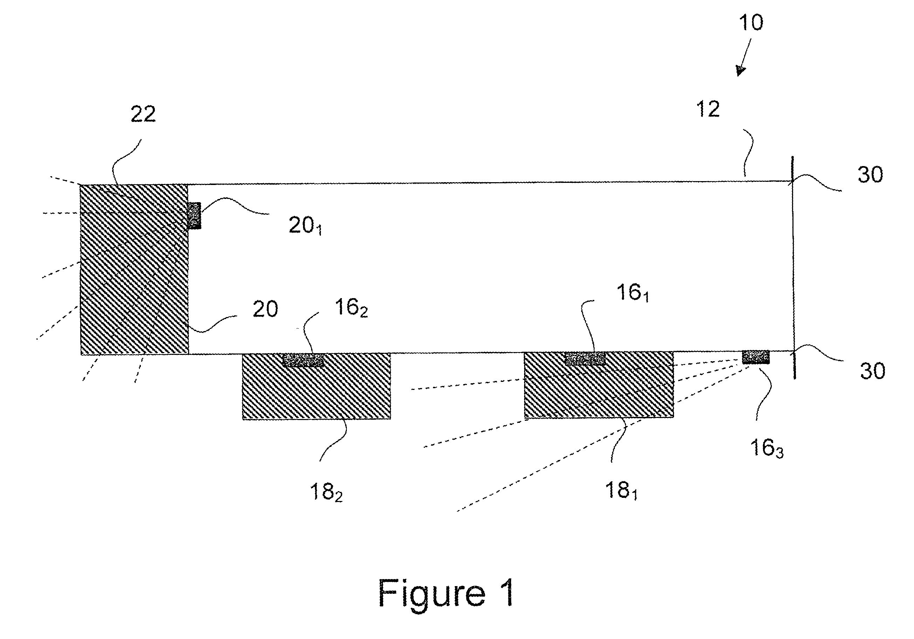

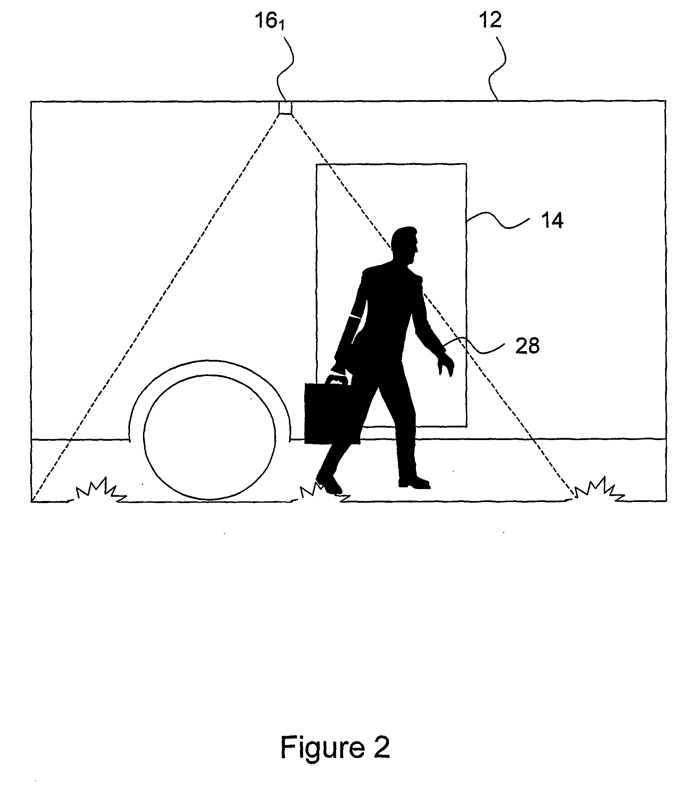

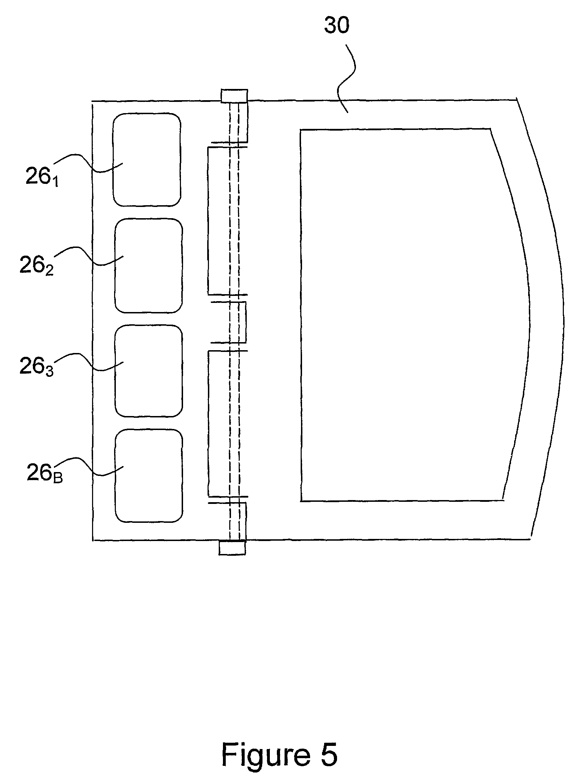

Figure 1 shows schematically a safety system for motor-driven vehicles 12 in accordance with the present invention. In the case illustrated in Figure 1 the motor-driven vehicle 12 is a bus 12, but may of course be a tram, an underground train carriage, a private car or a lorry. The safety system 10 comprises a movement detector 16₁, 16₂ at each door 14 (see Figure 2, for instance) to detect movement within a predetermined area 18₁, 18₂. The safety system 10 illustrated in Figure 1 also comprises a movement detector 20 at the rear of the bus 12 to detect movement within a predetermined area 22 behind the bus 12. The safety system 10 may naturally comprise as many movement detectors 16₁, ..., 16_{N} as the number of doors N pertaining to the vehicle, as well as a movement detector at the rear of the vehicle, where N is an integer. Each movement detector 16₁, 16₂, 20 is connected to an indicator 26₁, 26₂, 26_{B} (see Figure 5) in conjunction with the driver's seat 24 in the bus 12 in order to attract the attention of the driver upon detection of movement within said areas 18₁, 18₂, 22. An advantageous embodiment of the present invention is obtained if the movement detectors 16₁, 16₂, 20 consist of IR movement detectors. In accordance with another advantageous embodiment, the movement detectors 16₁, 16₂, 20 are of laser type.

In Figure 1 there is also disclosed the use of cameras 16₃, 20₁ of monitoring type each functioning as a movement detector.

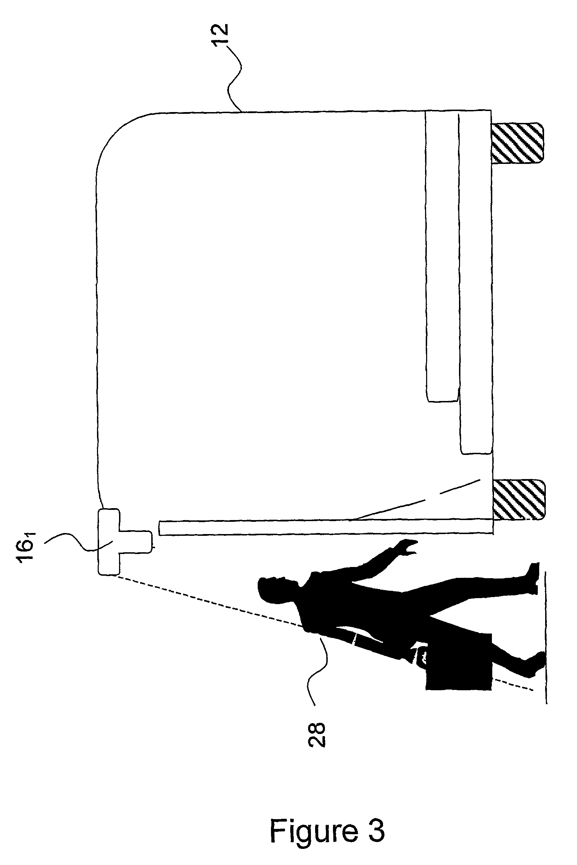

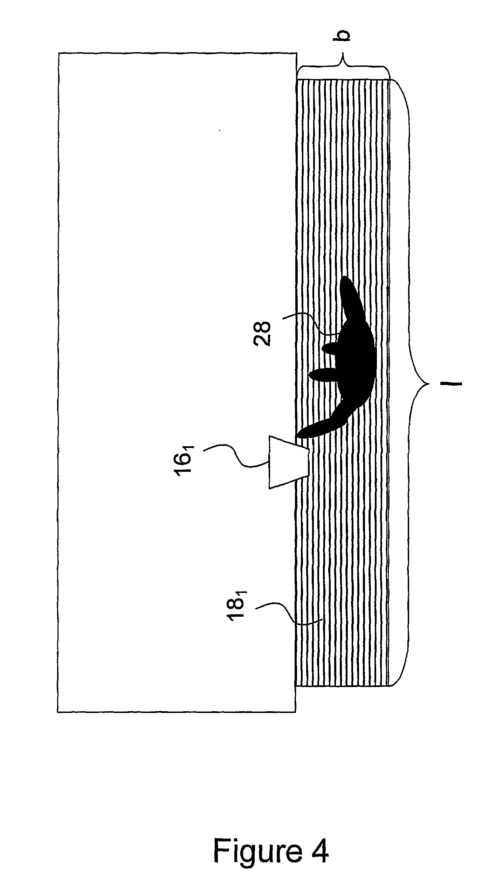

Figures 2-4 illustrate various views of part of the safety system 10 in accordance with the invention, shown in Figure 1. Here a passenger 28 is seen about to enter a bus 12 via a door 14. It is also clear from these figures how the movement detector 16₁, may be placed above the door 14. Naturally the movement detector 16₁ may be placed differently, e.g. centrally above the opening of the door 14. It is also clear that the passenger 28 is within the area 18₁, covered by the movement detector 16₁. As can be seen particularly clearly in Figure 4, this area 18₁ has a breadth, b, and a length, I, on the ground. In this case the driver's attention is attracted via the indicator 26₁. The breadth, b, of the area, e.g. 18₁, is preferably 1-2 metre out from the vehicle 12. The length, I, of the area 18₁ is at least the width of the door 14. However, as is clear from Figures 2-4, the length, I, may be considerably greater, about 3 times the width of the door 14.

Figure 5 shows schematically a rear-view mirror 30 forming a part of the safety system 10 in accordance with the present invention as shown in Figure 1. In this embodiment the safety system 10 comprises four indicators 26₁, 26₂, 26₃, 26_{B}. Each indicator 26₁, 26₂, 26₃, 26_{B} may consist, for example, of a lamp, each lamp emitting a different-coloured light. When movement is detected by the detector 16₁, for instance, in the area 18₁, the lamp 26₁ will light up. This attracts the attention of the driver. The placing of the lamps also makes it easier for the driver to see them. The lamps 26₁, 26₂, 26₃, 26_{B} are extinguished with a predetermined time delay after the relevant movement detector no longer detects movement within said areas. This time delay may be approximately 3-4 seconds, for instance.

In accordance with another embodiment the indicator is instead placed in the driver's place 24 (see Figure 1). In this embodiment each indicator may alternatively consist of a sound alarm, each sound alarm emitting a characteristic audible signal when a particular movement detector detects movement within said areas, and ceasing to emit the audible signal with a predetermined time delay after the movement detector no longer detects movement within said areas.

The safety system 10 in accordance with the invention may be powered, for instance, via the electrical system of the vehicle 12 (not shown). When the vehicle 12 is started the safety system 10 is activated for a predetermined period of time in order to check that the system 10 is functioning.

The embodiments of the safety system in accordance with the present invention shown in the drawings do not constitute any limitation of the invention, its scope of protection being defined in the appended claims.

## Claims

1. A safety system (10) for motor-driven vehicles (12) comprising at least one door (14), a movement detector (16₁, ..., 16_{N}) at each door (14) to detect movement within a predetermined area (18₁, ..., 18_{N}) near said door (14) and/or a movement detector (20) at the rear of the vehicle (12) to detect movement within a predetermined area (22) behind the vehicle (12), **characterized in that** each movement detector (16₁, ..., 16_{N}, 20) is connected to an indicator (26₁, ..., 26_{N}, 26_{B}) in conjunction with the rear-view mirror (30) of the vehicle (12) in order to attract the attention of the driver upon detection of movement within said area/areas (18₁, ..., 18_{N}, 22) to enable the driver alone to reach a decision.

2. A safety system (10) for motor-driven vehicles (12) comprising at least one door (14) as claimed in claim 1, **characterized in that** said indicators ((26₁, ..., 26N, 26_{B}) are assembled in or in the proximity of the rear-view mirror (30) of the vehicle (12), or at/inside the window-frame/front windscreen of the vehicle (12), or at the coach work of the vehicle (12) in the proximity of the driver.

3. A safety system (10) for motor-driven vehicles (12) as claimed in claim 1 or 2, **characterized in that** each movement detector (16₁, ..., 16_{N}, 20) consists of an IR movement detector.

4. A safety system (10) for motor-driven vehicles (12) as claimed in claim 1 or 2, **characterized in that** each movement detector (16₁, ..., 16_{N}, 20) consists of a movement detector of laser type.

5. A safety system (10) for motor-driven vehicles (12) as claimed in claim 1 or 2, **characterized in that** each movement detector (16₁, ..., 16_{N}, 20) consists of a camera of monitoring type.

6. A safety system (10) for motor-driven vehicles (12) as claimed in any one of claims 1-5, **characterized in that** each indicator (26₁, ..., 26_{N}, 26_{B}) consists of a lamp, each lamp emitting a different-coloured light.

7. A safety system (10) for motor-driven vehicles (12) as claimed in claim 5, **characterized in that** each indicator (26₁, ..., 26_{N}, 26_{B}) consists of a monitor in combination with lamps indicating which camera is detecting movement.

8. A safety system (10) for motor-driven vehicles (12) as claimed in claim 6, **characterized in that** the lamps are fitted close to or in the rear-view mirror (30), and **in that** each lamp lights up when the relevant movement detector (16₁, ..., 16_{N}, 20) detects movement within said areas (18₁, ..., 18_{N}, 22), and is extinguished with a predetermined time delay after the relevant movement detector (16₁, ..., 16_{N}, 20) no longer detects movement within said areas (18₁, ..., 18_{N}, 22).

9. A safety system (10) for motor-driven vehicles (12) as claimed in any one of claims 1-4, **characterized in that** each indicator (26₁, ..., 26_{N}, 26_{B}) consists of a sound alarm, each sound alarm emitting an audible signal when the relevant movement detector (16₁, ..., 16_{N}, 20) detects movement within said areas (18₁, ..., 18_{N}, 22), and ceasing to emit audible signals with a predetermined time delay after the relevant movement detector (16₁, ..., 16_{N}, 20) no longer detects movement within said areas (18₁, ..., 18_{N}, 22).

10. A safety system (10) for motor-driven vehicles (12) as claimed in claim 5 or claim 9, **characterized in that** said time delay is approximately 0-10 seconds.

11. A safety system (10) for motor-driven vehicles (12) as claimed in any one of claims 1-10, **characterized in that** the movement detectors (16₁, ..., 16_{N}, 20) at the doors (14) are arranged above the doors (14), and **in that** said areas (18₁, ..., 18_{N}), at ground level comprise at least the width (I) of the door (14) and approximately 0-2 meter out from the vehicle.

12. A safety system (10) for motor-driven vehicles (12) as claimed in any one of claims 1-11, **characterized in that** the system (10) is powered via the electrical system of the vehicle, and **in that** the safety system (10) is activated when the vehicle (12) is started and the indicator(s) (26₁, ..., 26_{N}, 26_{B}) is/are activated for a predetermined period of time to check that the system (10) is functioning.

13. A safety system (10) for motor-driven vehicles (12) as claimed in any one of claims 1-12, **characterized in that** the system (10) also comprises a wireless headset with indicator lamps and sound emitting devices, each lamp emitting a different coloured light, wherein the headset can communicate with the movement detectors (16₁, ..., 16_{N}, 20).

## Patentansprüche

1. Sicherheitssystem (10) für motorbetriebene Fahrzeuge (12) umfassend wenigstens eine Tür (14), einen Bewegungsdetektor (16₁, ..., 16_{N}) an jeder Tür (14), um eine Bewegung innerhalb eines vorbestimmten Bereiches (18₁, ..., 18_{N}) in der Nähe der Tür (14) zu detektieren und/oder einen Bewegungsdetektor (20) an der Hinterseite des Fahrzeugs (12), um Bewegung innerhalb eines vorbestimmten Bereiches (22) hinter dem Fahrzeug (12) zu detektieren, **dadurch gekennzeichnet, dass** jeder Bewegungsdetektor (16₁, ..., 16_{N}, 20) mit einem Indikator (26₁, ..., 26_{N}, 26_{B}) in Verbindung mit dem Rückspiegel (30) des Fahrzeugs (12) verbunden ist, um die Aufmerksamkeit des Fahrers auf die Detektion von Bewegung innerhalb des genannten Gebietes/der genannten Gebiete (18₁, ..., 18_{N} 22) zu erregen, um es dem Fahrer zu ermöglichen, alleine eine Entscheidung zu treffen.

2. Sicherheitssystem (10) für motorbetriebene Fahrzeuge (12) umfassend wenigstens eine Tür (14), nach Anspruch 1, **dadurch gekennzeichnet, dass** die Indikatoren (26₁, ..., 26_{N}, 26_{B}) in oder in der Nähe des Rückspiegels (30) des Fahrzeugs (12) oder an oder innerhalb des Fensterrahmens/der Windschutzscheibe des Fahrzeugs (12) oder im Karosseriebereich des Fahrzeugs (12) in der Nähe des Fahrers vorgesehen sind.

3. Sicherheitssystem (10) für motorbetriebene Fahrzeuge (12) nach Anspruch 1 oder 2, **dadurch gekennzeichnet, dass** jeder Bewegungsdetektor (16₁, ..., 16_{N}, 20) aus einem Infrarot-Bewegungsdetektor besteht.

4. Sicherheitssystem (10) für motorbetriebene Fahrzeuge (12) nach Anspruch 1 oder 2, **dadurch gekennzeichnet, dass** jeder Bewegungsdetektor (16₁, .... 16_{N}, 20) aus einem Bewegungsdetektor des Lasertyps besteht.

5. Sicherheitssystem (10) für motorbetriebene Fahrzeuge (12) nach Anspruch 1 oder 2 **dadurch gekennzeichnet, dass** jeder Bewegungsdetektor (16₁, ..., 16_{N}, 20) nach der Art eines Kameradetektors ausgebildet ist.

6. Sicherheitssystem (10) für motorbetriebene Fahrzeuge (12) nach irgendeinem der Ansprüche 1 bis 5, **dadurch gekennzeichnet, dass** jeder Indikator (26₁, ..., 26_{N}, 26_{B}) aus einer Lampe besteht, wobei jede Lampe ein Licht unterschiedlicher Farbe emittiert.

7. Sicherheitssystem (10) für motorbetriebene Fahrzeuge (12) nach Anspruch 5, **dadurch gekennzeichnet, dass** jeder Indikator (26₁, ..., 26_{N}, 26_{B}) aus einem Monitor in Kombination mit Lampen besteht, die anzeigen, welche Kamera eine Bewegung detektiert.

8. Sicherheitssystem (10) für motorbetriebene Fahrzeuge (12) nach Anspruch 6, **dadurch gekennzeichnet, dass** die Lampen in der Nähe zu dem oder in dem Rückspiegel (30) vorgesehen sind, und dass jede Lampe aufleuchtet, wenn der relevante Bewegungsdetektor (16₁, ..., 16_{N}, 20) eine Bewegung innerhalb der genannten Gebiete (18₁, ..., 18_{N}, 22) detektiert, und mit einer vorbestimmten Zeitverzögerung, nachdem der relevante Bewegungsdetektor (16₁, ..., 16_{N}, 20) keine Bewegung mehr innerhalb der genannten Gebiete detektiert, ausgelöscht wird.

9. Sicherheitssystem (10) für motorbetriebene Fahrzeuge (12) nach irgendeinem der Ansprüche 1 bis 4, **dadurch gekennzeichnet, dass** jeder Indikator (26₁, ... , 26_{N}, 26_{B}) aus einem akustischen Alarm besteht, wobei jeder akustische Alarm ein hörbares Signal emittiert, wenn der relevante Bewegungsdetektor (16₁, ..., 16_{N}, 20) eine Bewegung innerhalb der genannten Gebiete (18₁, ..., 18_{N}, 22) detektiert und aufhört, hörbare Signale zu emittieren, mit einer vorbestimmten Zeitverzögerung, nachdem der relevante Bewegungsdetektor (16₁, ..., 16_{N}, 20) keine Bewegung mehr innerhalb der genannten Gebiete detektiert.

10. Sicherheitssystem (10) für motorbetriebene Fahrzeuge (12) nach Anspruch 5 oder 9, **dadurch gekennzeichnet, dass** die Zeitverzögerung ungefähr 0-10 Sekunden ist.

11. Sicherheitssystem (10) für motorbetriebene Fahrzeuge (12) nach irgendeinem der Ansprüche 1 bis 10, **dadurch gekennzeichnet, dass** die Bewegungsdetektoren (16₁, ..., 16_{N}, 20) an den Türen (14) oberhalb der Türen (14) angeordnet sind, und dass die genannten Gebiete (18₁, ..., 18_{N}) auf Bodenhöhe wenigstens die Breite (1) der Tür (14) umfassen, ungefähr 0-2 Meter von dem Fahrzeug entfernt.

12. Sicherheitssystem (10) für motorbetriebene Fahrzeuge (12) nach irgendeinem der Ansprüche 1 bis 11, **dadurch gekennzeichnet, dass** das System (10) über das elektrische System des Fahrzeugs mit Spannung versorgt wird, und dass das Sicherheitssystem (10) aktiviert wird, wenn das Fahrzeug (12) gestartet wird, und dass der Indikator/die Indikatoren (26₁, ..., 26_{N}, 26_{B}) eine vorbestimmte Zeitdauer aktiviert wird/aktiviert werden, um zu prüfen, ob das System (10) funktioniert.

13. Sicherheitssystem (10) für motorbetriebene Fahrzeuge (12) nach irgendeinem der Ansprüche 1 bis 12, **dadurch gekennzeichnet, dass** das System (10) ferner ein drahtloses Headset mit Indikatorlampen und Schall erzeugenden Einrichtungen umfasst, wobei jede Lampe ein Licht unterschiedlicher Farbe emittiert, wobei das Headset mit den Bewegungsdetektoren (16₁, ..., 16_{N}, 20) kommunizieren kann.

## Revendications

1. Système de sécurité (10) pour véhicules à moteur (12) comprenant au moins une porte (14), un détecteur de mouvement (16₁, ..., 16_{N}) au niveau de chaque porte (14) pour détecter un mouvement à l'intérieur d'une zone prédéterminée (18₁, ..., 18_{N}) près de ladite porte (14) et/ou un détecteur de mouvement (20) à l'arrière du véhicule (12) pour détecter un mouvement à l'intérieur d'une zone prédéterminée (22) derrière le véhicule (12), **caractérisé en ce que** chaque détecteur de mouvement (16₁, ..., 16_{N}, 20) est connecté à un indicateur (26₁, ..., 26_{N}, 26_{B}) conjointement avec le rétroviseur (30) du véhicule (12) de manière à attirer l'attention du conducteur à la détection de mouvement à l'intérieur de ladite ou desdites zones prédéterminées (18₁, ..., 18_{N}, 22) pour permettre au seul conducteur de prendre une décision.

2. Système de sécurité (10) pour véhicules à moteur (12) comprenant au moins une porte (14) selon la revendication 1, **caractérisé en ce que** lesdits indicateurs (26₁, ..., 26_{N}, 26_{B}) sont assemblés dans ou à proximité du rétroviseur (30) du véhicule (12) ou au niveau/à l'intérieur du châssis de fenêtre/pare-brise avant du véhicule (12) ou au niveau de la carrosserie du véhicule (12) à proximité du conducteur.

3. Système de sécurité (10) pour véhicules à moteur (12) selon la revendication 1 ou 2, **caractérisé en ce que** chaque détecteur de mouvement (16₁, ..., 16_{N}, 20) consiste en un détecteur de mouvement à infrarouge.

4. Système de sécurité (10) pour véhicules à moteur (12) selon la revendication 1 ou 2, **caractérisé en ce que** chaque détecteur de mouvement (16₁, ..., 16_{N}, 20) consiste en un détecteur de mouvement de type laser.

5. Système de sécurité (10) pour véhicules à moteur (12) selon la revendication 1 ou 2, **caractérisé en ce que** chaque détecteur de mouvement (16₁, ..., 16_{N}, 20) consiste en une caméra de type de surveillance.

6. , Système de sécurité (10) pour véhicules à moteur (12) selon l'une quelconque des revendications 1 à 5, **caractérisé en ce que** chaque indicateur (26₁, ..., 26_{N}, 26_{B}) consiste en un témoin lumineux, chaque témoin lumineux émettant une lumière de couleur différente.

7. Système de sécurité (10) pour véhicules à moteur (12) selon la revendication 5, **caractérisé en ce que** chaque indicateur (26₁, ..., 26_{N}, 26_{B}) consiste en un moniteur en combinaison avec des témoins lumineux indiquant quelle caméra détecte un mouvement.

8. Système de sécurité (10) pour véhicules à moteur (12) selon la revendication 6, **caractérisé en ce que** les témoins lumineux sont montés près ou dans le rétroviseur (30) et **en ce que** chaque témoin lumineux s'allume quand le détecteur de mouvement (16₁, ..., 16_{N}, 20) correspondant détecte un mouvement à l'intérieur desdites zones (18₁, ..., 18_{N}, 22) et est éteint avec un retard prédéterminé après que le détecteur de mouvement (16₁, ..., 16_{N}, 20) correspondant ne détecte plus de mouvement à l'intérieur desdites zones (18₁, ..., 18_{N}, 22).

9. Système de sécurité (10) pour véhicules à moteur (12) selon l'une quelconque des revendications 1 à 4, **caractérisé en ce que** chaque indicateur (26₁, ..., 26_{N}, 26_{B}) consiste en une alarme acoustique, chaque alarme acoustique émettant un signal sonore quand le détecteur de mouvement (16₁, ..., 16_{N}, 20) correspondant détecte un mouvement à l'intérieur desdites zones (18₁, ..., 18_{N}, 22) et cesse d'émettre des signaux sonores avec un retard prédéterminé après que le détecteur de mouvement (16₁, ..., 16_{N}, 20) correspondant ne détecte plus de mouvement à l'intérieur desdites zones (18₁, ..., 18_{N}, 22).

10. Système de sécurité (10) pour véhicules à moteur (12) selon la revendication 5 ou 9, **caractérisé en ce que** ledit retard est d'environ 0-10 secondes.

11. Système de sécurité (10) pour véhicules à moteur (12) selon l'une quelconque des revendications 1 à 10, **caractérisé en ce que** les détecteurs de mouvement (16₁, ..., 16_{N}, 20) au niveau des portes (14) sont disposés au-dessus des portes (14) et **en ce que** lesdites zones (18₁, ..., 18_{N}), au niveau du sol, comprennent au moins la largeur (I) de la porte (14) et environ 0-2 mètres hors du véhicule.

12. Système de sécurité (10) pour véhicules à moteur (12) selon l'une quelconque des revendications 1 à 11, **caractérisé en ce que** le système (10) est alimenté via le système électrique du véhicule et **en ce que** le système de sécurité (10) est activé quand le véhicule (12) est démarré et l'indicateur/les indicateurs (26₁, ..., 26_{N}, 26_{B}) est/sont activés pendant une période de temps prédéterminée pour vérifier que le système (10) fonctionne.

13. Système de sécurité (10) pour véhicules à moteur (12) selon l'une quelconque des revendications 1 à 12, **caractérisé en ce que** le système (10) comprend également un casque sans fil avec témoins lumineux indicateurs et dispositifs d'émission acoustique, chaque témoin lumineux émettant une lumière de couleur différente, dans lequel le casque peut communiquer avec les détecteurs de mouvement (16₁, ..., 16_{N}, 20).
